# EUROPÄISCHE PATENTSCHRIFT

(11) **EP 1 107 876 B1**
(45) Veröffentlichungstag und Bekanntmachung des Hinweises auf die Patenterteilung: **11.12.2002**
(21) Anmeldenummer: 99932870.1
(22) Anmeldetag: 13.06.1999
(51) Int. Cl.: B60J 11/00

(54) **SCHUTZABDECKUNG FÜR EIN KAROSSERIETEIL EINES FAHRZEUGES UND VERFAHREN ZU DESSEN HERSTELLUNG**
PROTECTING SHIELD FOR AN AUTOMOTIVE BODY PART AND METHOD FOR THE PRODUCTION THEREOF
ECRAN PROTECTEUR POUR UNE PARTIE DE CARROSSERIE DE VEHICULE ET PROCEDE DE FABRICATION DUDIT ECRAN

(30) Priorität: 28.08.1998 DE 19839158
(43) Veröffentlichungstag der Anmeldung: 20.06.2001
(73) Patentinhaber: Volkswagen Aktiengesellschaft, 38436 Wolfsburg (DE)
(72) Erfinder: NEUFER, Walter, D-38440 Wolfsburg (DE)
(74) Vertreter: Zeitler & Kollegen
(86) Internationale Anmeldenummer: EP9904908
(87) Internationale Veröffentlichungsnummer: WO00012341

(56) Entgegenhaltungen:
- EP-A- 0 099 455
- WO-A-97/16328
- WO-A-98/18643
- DE-A- 3 807 667
- DE-U- 9 200 318
- FR-A- 2 527 529
- FR-A- 8 308 506
- US-A- 4 227 718
- US-A- 5 127 974
- US-A- 5 280 989
- US-A- 5 725 933

## Beschreibung

Die Erfindung betrifft eine Schutzabdeckung für ein Karosserieteil eines Fahrzeuges, insbesondere eines Kraftfahrzeuges, gemäß dem Oberbegriff des Anspruchs **1**, sowie ein Verfahren zum Herstellen einer derartigen Schutzabdeckung, gemäß dem Oberbegriff des Anspruchs 12.

Zum Schutz von entsprechenden Bereichen eines Karosserieteiles eines Kraftfahrzeuges vor Steinschlag, beispielsweise durch Eigenbewurf der Vorderräder, sind plane Kunststoffolien vorgesehen, welche bei der Herstellung des Kraftfahrzeuges manuell und an die entsprechende Form der zu schützenden Karosserieteiles angepaßt aufzubringen sind. Hierbei ergibt sich jedoch der Nachteil, daß diese Folien nach der Applikation häufig nicht genau ausgerichtet sind und femer bei stark gewölbten Oberflächen der Karosserieteile nicht anwendbar sind, da sich Falten in der Folie ergeben.

So ist aus der US 5 280 989 eine abnehmbare Schutzabdeckung für eine Karosseriefront eines Kraftfahrzeuges in Form eines fest haftenden Vinylschürzensystems bekannt, wobei tetzteres wenigstens eine flexibles Vinylschichtgebilde umfaßt, welche in einer vorbestimmten Form ausgeschnitten ist. Eine derartiges Schürzensystem ist jedoch nur zum vorübergehenden Schutz von Teilen der Karosserie, beispielsweise im Winter oder bei Fahrten erhöhter Steinschlaggefahr geeignet. Solange die Abdeckschürze montiert ist, kann beispielsweise keine herkömmliche Waschstraße zur äußerlichen Reinigung des Kraftfahrzeuges angefahren werden, so daß es sich immer nur um einen temporären Schutz für außergewöhnliche, zeitlich begrenzte Betriebsbedingungen handelt

Aus WO 976328 ist eine Verkleidung für einen Stoßfänger eines Kraftfahrzeuges bekannt, welche eine äußere Schutzdecke und eine innere Farbfläche aufweist. Die äußere Schutzdecke ist transparent, so daß die innere Farbfläche von außen sichtbar ist

DE 3807667 A offenbart eine mehrschichtige, flexible und auf dem zu schützenden Karosserieteil klebbar Schutzabdeckung, deren Klebeschicht durch eine abziehbare Abdeckschicht gegen z.B. Staub oder ähnliche beschädigende Mittel geschutzt ist.

DE 3316385 A beschreibt eine Schutzabdeckung gemäss dem Oberbegriff des Anspruchs 1.

Der vorliegenden Erfindung liegt daher die Aufgabe zugrunde, eine Schutzabdeckung und ein Verfahren der obengenannten Art zur Verfügung zu stellen, wobei die obengenannten Nachteile überwunden werden.

Diese Aufgabe wird erfindungsgemäß durch eine Schutzabdeckung der o.g. Art mit den in Anspruch 1 gekennzeichneten Merkmalen und durch ein Verfahren der o.g. Art mit den in Anspruch 12 gekennzeichneten Merkmalen gelöst. Vorteilhafte Ausgestaltungen der Erfindung sind in den abhängigen Ansprüchen angegeben.

Dazu ist es bei einer Schutzabdeckung der o.g. Art erfindungsgemäß vorgesehen, daß die Schutzabdeckung ein tiefgezogenes Formteil ist

Dies hat den Vorteil, daß durch die vorgeformte, tiefgezogene Ausgestaltung der Schutzabdeckung im Gegensatz zu bisher üblichen planen Steinschlagfolien eine schnellere und genauere Applikation erzielt wird.

in einer besonders bevorzugten Ausführungsform ist die Schutzabdeckung aus PVC gefertigt, ggf. eine transparente Folie, insbesondere eine Steinschlagfolie und/oder Dekorfolie. Die Schutzabdeckung hat dabei beispielsweise eine Dicke von 0,2 mm bis 1,0 mm, insbesondere von 0,35 mm bis 0,7 mm.

Zur selbstfhaftenden Applikation der erfindungsgemäßen Schutzabdeckung ist in vorteilhafter Weise auf dieser karosserieseitig eine Klebeschicht vorgesehen. Diese Klebeschicht ist beispielsweise ein Hartklebstoff, insbesondere auf Acrylsäureester-Basis.

Für eine problemlose Transport- und Lagerfähigkeit der erfindungsgemäßen Schutzabdeckung vor einer Verarbeitung bzw. Applikation ist auf der Klebeschicht ein diese abdeckender Liner vorgesehen.

Zweckmäßigerweise ist der Liner ein tiefgezogenes Formteil.

Zur Stabilisierung der Schutzabdeckung und als gleichzeitiger Kratzschutz ist auf der Schutzabdeckung an einer der Karosserie abgewandten Seite eine PE-Abdeckung vorgesehen.

Das Karosserieteil ist beispielsweise ein Kotflügel, ein Stoßfänger oder ein Kunststoffteil.

Bei einem Verfahren der o.g. Art ist es erfindungsgemäß vorgesehen, daß die Schutzabdeckung tiefgezogen wird.

Dies hat den Vorteil, daß durch die vorgeformte, tiefgezogene Ausgestaltung der Schutzabdeckung im Gegensatz zu bisher üblichen planen Steinschlagfolien eine schnellere und genauere Applikation erzielt wird.

In einer besonders bevorzugten Ausbildung des Verfahrens wird die Schutzabdeckung in Form einer ggf. transparent ausgebildeten Folie, beispielsweise Steinschlagfolie und/oder Dekorfolie, aus PVC tiefgezogen. Hierbei wird die Schutzabdeckung beispielsweise in einer Dicke von 0,2 mm bis 1,0 mm, insbesondere von 0,35 mm bis 0,7 mm, gefertigt

Zur selbstfhaftenden Applikation der Schutzabdeckung wird in vorteilhafter Weise auf dieser karosserieseitig eine Klebeschicht aufgebracht. Diese Klebeschicht ist beispielsweise ein Hartklebstoff, insbesondere auf Acrylsäureester-Basis.

Für eine problemlose Transport- und Lagerfähigkeit der erfindungsgemäßen Schutzabdeckung vor einer Verarbeitung bzw. Applikation wird auf der Klebeschicht ein diese abdeckender Liner aufgebracht. Zweckmäßigerweise wird der Liner tiefgezogen.

Zweckmäßigerweise wird unmittelbar vor der Applikation der Schutzabdeckung die Klebeschicht mit einem Fluid, insbesondere Wasser, besprüht. Dieses Naßverkleben bringt den Vorteil, daß die Schutzabdeckung auf dem Karosserieteil zur genauen Positionierung verschiebbar ist.

Zur Stabilisierung der Schutzabdeckung und als gleichzeitiger Kratzschutz wird auf der Schutzabdeckung an einer der Karosserie abgewandten Seite eine PE-Abdeckung aufgebracht.

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnungen. Diese zeigen in
- Fig. 1: eine bevorzugte Ausführungsform einer erfindungsgemäßen Schutzabdeckung in Aufsicht,
- Fig. 2: eine Schnittansicht entlang Linie A-A von Fig. 1,
- Fig. 3: eine Schnittansicht entlang Linie B-B- von Fig. 1,
- Fig. 4: eine perspektivische Ansicht eines Montagebeispieles für eine erfindungsgemäße Schutzabdeckung,
- Fig. 5: eine vergrößerte Darstellung des Details Y von Fig. 4 und
- Fig. 6: eine Schnittansicht entlang Linie A-A von Fig. 5.

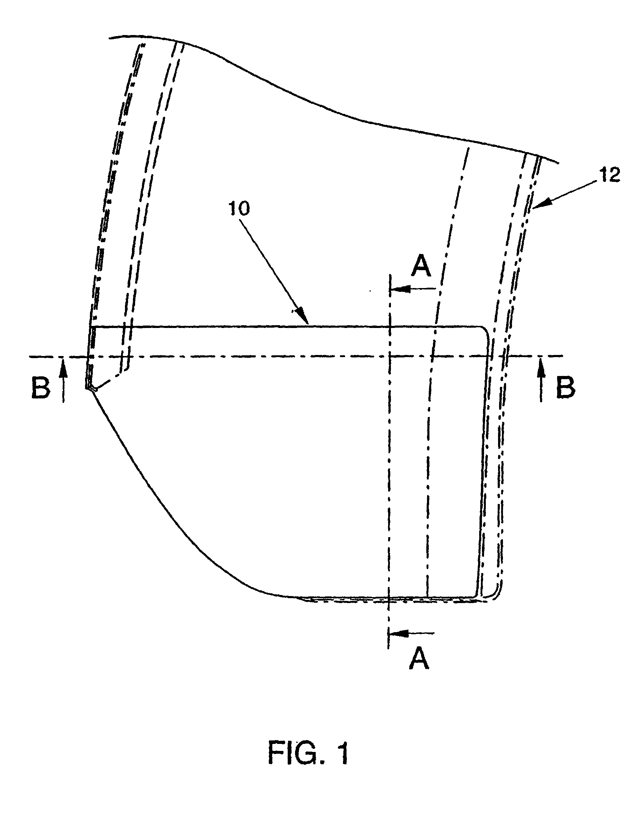

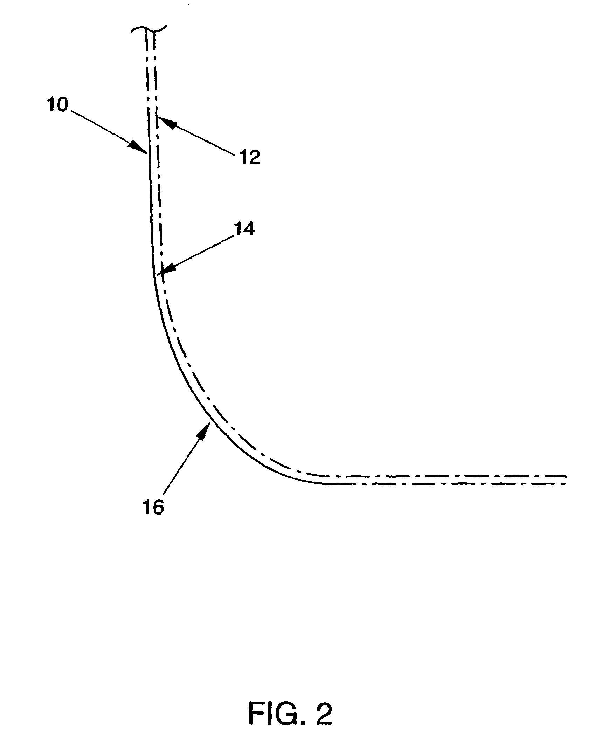

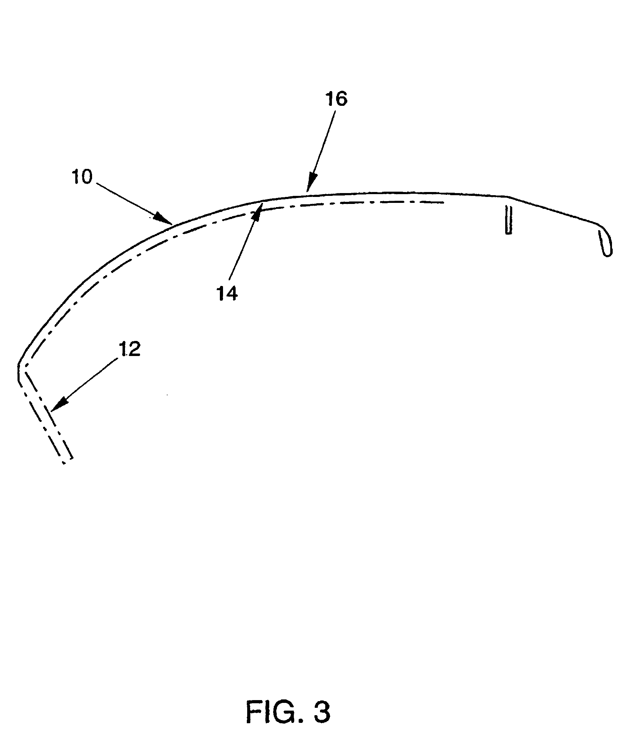

Die in Fig. 1 bis 3 dargestellte bevorzugte Ausführungsform einer erfindungsgemäßen Schutzabdeckung 10 ist in Form einer Steinschlagfolie an einem hinteren Kotflügel 12 angeordnet. Diese Steinschlagfolie 10 ist beispielsweise mittels Tiefziehen derart vorgeformt, daß sie an die Form des Kotflügels 12 in einem Applikationsbereich der Steinschlagfolie 10 angepaßt ist.

Die Steinschlagfolie 10 ist beispielsweise eine transparente Dekorfolie mit Schutzfunktion auf der Basis von PVC und einseitig, karosserieseitig mit einer Klebeschicht 14 versehen. Diese Klebeschicht 14 ist bevorzugt ein Haftklebstoff auf der Basis von Acrylsäureester und dient zum Aufkleben der Steinschlagfolie 10 auf den Kotflügel 12. Vor der Applikation ist die Klebeschicht 14 von einem nicht dargestellten PE-Liner bedeckt, welcher vor der Applikation der erfindungsgemäßen Steinschlagfolie 10 abgezogen wird. Es ist ferner besonders zweckmäßig, vor der Applikation der Steinschlagfolie 10 die Klebeschicht mit Wasser einzusprühen, so daß die auf den Kotflügel 12 aufgesetzte Steinschlagfolie 10 zur genauen Positionierung verschiebbar ist.

An einer der Karosserie abgewandten Seite 16 der Steinschlagfolie 10 ist ebenfalls vor der Applikation eine Folie als Oberflächenschutz und Formstabilisator vorgesehen. Diese Folie wird nach der Applikation oder vor der Übergabe des Kraftfahrzeuges an einen Endverbraucher abgezogen.

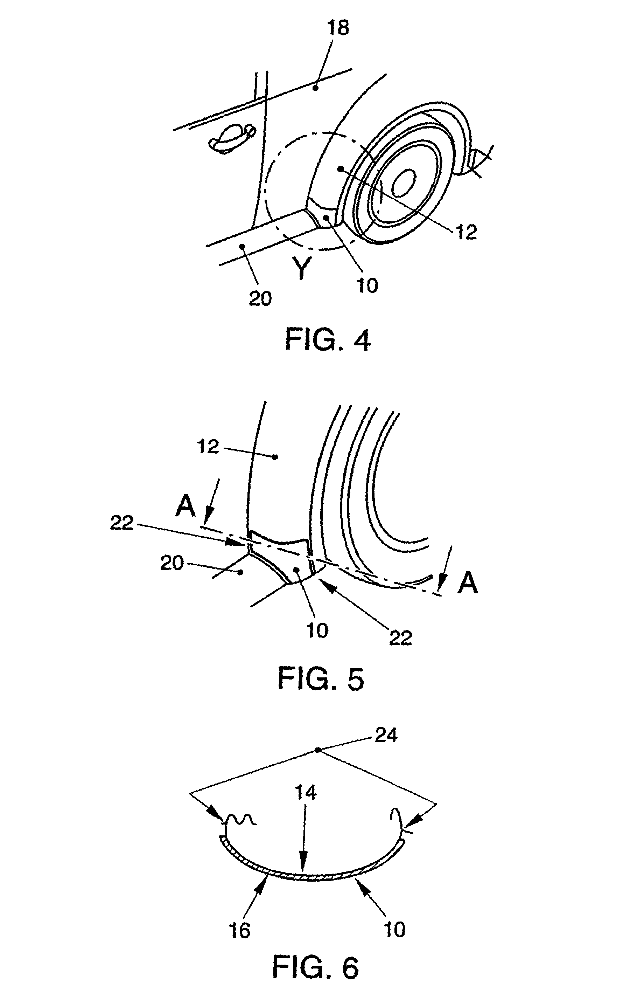

Die Fig. 4 bis 6 veranschaulichen ein Applikationsbeispiel für eine Steinschlagfolie 10 gemäß einer alternativen Ausführungsform an einem Kotflügel 12 eines Kraftfahrzeuges 18. Wie sich insbesondere aus Fig. 5 ergibt, ist die Steinschlagfolie 10 mit einem Ausschnitt für einen an den Kotflügel 12 angrenzenden Schweller 20 ausgebildet und liegt in Bereichen 22 am Kotflügel 12 seitlich an.

In diesen Anlagebereichen 22 sind an der Steinschlagfolie 10 jeweilige Radienausläufe 24 ausgebildet, wie sich insbesondere aus Fig. 6 ergibt. Diese sorgen für eine feste und enge Umschließung des Kotflügels 12 durch die Steinschlagfolie 10, wobei ein Eindringen von Schmutz und Feuchtigkeit zwischen Steinschlagfolie 10 und Kotflügel 12 wirksam vermieden ist.

### BEZUGSZEICHENLISTE

- 10: Steinschlagfolie
- 12: hinterer Kotflügel
- 14: Klebeschicht
- 16: von der Karosserie abgewandte Seite
- 18: Kraftfahrzeug
- 20: Schweller
- 22: Anlagebereiche
- 24: Radienausläufe

## Patentansprüche

1. Schutzabdeckung (10) für ein Karosserieteil (12) eines Fahrzeuges, insbesondere eines Kraftfahrzeuges (18), wobei die Schutzabdeckung (10) ein der Form des Karosserieteiles (12) angepaßtes, vorgeformtes, tiefgezogenes Teil ist und auf der Schutzabdeckung (10) karosserieseitig eine Klebeschicht (14) vorgesehen ist,
**dadurch gekennzeichnet, daß**
auf der Klebeschicht (14) ein diese abdeckender Liner vorgesehen ist, der als tiefgezogenes Formteil ausgebildet ist.

2. Schutzabdeckung (10) nach Anspruch 1,
**dadurch gekennzeichnet, daß**
die Schutzabdeckung (10) aus PVC gefertigt ist.

3. Schutzabdeckung (10) nach Anspruch 1 oder 2,
**dadurch gekennzeichnet, daß**
die Schutzabdeckung (10) eine Folie, insbesondere eine Steinschlagfolie und/oder Dekorfolie, ist.

4. Schutzabdeckung (10) nach einem der vorhergehenden Ansprüche,
**dadurch gekennzeichnet, daß**
die Schutzabdeckung (10) transparent ausgebildet ist.

5. Schutzabdeckung (10) nach einem der vorhergehenden Ansprüche,
**dadurch gekennzeichnet, daß**
die Schutzabdeckung (10) eine Dicke von 0,2 mm bis 1,0 mm, insbesondere von 0,35 mm bis 0,7 mm, aufweist.

6. Schutzabdeckung (10) nach einem der vorhergehenden Ansprüche,
**dadurch gekennzeichnet, daß**
die Klebeschicht (14) ein Hartklebstoff, insbesondere auf Acrylsäureester-Basis, ist.

7. Schutzabdeckung (10) nach einem der vorhergehenden Ansprüche,
**dadurch gekennzeichnet, daß**
auf der Schutzabdeckung (10) an einer der Karosserie abgewandten Seite (16) eine PE-Abdeckung vorgesehen ist.

8. Schutzabdeckung (10) nach einem der vorhergehenden Ansprüche,
**dadurch gekennzeichnet, daß**
das Karosserieteil (12) ein Kotflügel, ein Stoßfänger oder ein Kunststoffteil ist.

9. Verfahren zum Herstellen einer Schutzabdeckung für ein Karosserieteil eines Fahrzeuges, insbesondere eines Kraftfahrzeuges, wobei die Schutzabdeckung der Form des Karosserieteiles angepaßt tiefgezogen vorgeformt und auf der Schutzabdeckung karosserieseitig eine Klebeschicht aufgebracht wird,
**dadurch gekennzeichnet, daß**
auf der Klebeschicht ein diese abdeckender Liner aufgebracht wird, wobei der Liner als tiefgezogenes Formteil hergestellt wird.

10. Verfahren nach Anspruch 9,
**dadurch gekennzeichnet, daß**
die Schutzabdeckung aus PVC gefertigt wird.

11. Verfahren nach einem der Ansprüche 9 oder 10,
**dadurch gekennzeichnet, daß**
die Schutzabdeckung als eine Folie, insbesondere eine Steinschlagfolle und/oder Dekorfolie, hergestellt wird.

12. Verfahren nach einem der Ansprüche 9 bis 11,
**dadurch gekennzeichnet, daß**
die Schutzabdeckung transparent ausgebildet wird.

13. Verfahren nach einem der Ansprüche 9 bis 12,
**dadurch gekennzeichnet, daß**
die Schutzabdeckung in einer Dicke von 0,2 mm bis 1,0 mm, insbesondere von 0,35 mm bis 0,7 mm, gefertigt wird.

14. Verfahren nach einem der Ansprüche 9 bis 13,
**dadurch gekennzeichnet, daß**
als Klebeschicht ein Hartklebstoff, insbesondere auf Acrylsäureester-Basis, verwendet wird.

15. Verfahren nach einem der Ansprüche 9 bis 14,
**dadurch gekennzeichnet, daß**
unmittelbar vor der Applikation der Schutzabdeckung die Klebeschicht mit einem Fluid, Insbesondere Wasser, besprüht wird

16. Verfahren nach einem der Ansprüche 9 bis 15,
**dadurch gekennzeichnet, daß**
auf der Schutzabdeckung an einer der Karosserie abgewandten Seite eine PE-Abdeckung aufgebracht wird.

## Claims

1. Protective covering (10) for a body part (12) of a vehicle, especially a motor vehicle (18), the protective covering (10) being a preformed, deep-drawn part matched to the shape of the body part (12), an adhesive layer (14) being provided on the body side of the protective covering (10), **characterized in that** on the adhesive layer (14) there is provided a liner which covers it and which is formed as a deep-drawn moulding.

2. Protective covering (10) according to Claim 1, **characterized in that** the protective covering (10) is fabricated from PVC.

3. Protective covering (10) according to Claim 1 or 2, **characterized in that** the protective covering (10) is a film, in particular a stone-chip film and/or decorative film.

4. Protective covering (10) according to one of the preceding claims, **characterized in that** the protective covering (10) is designed to be transparent.

5. Protective covering (10) according to one of the preceding claims, **characterized in that** the protective covering (10) has a thickness of 0.2 mm to 1.0 mm, in particular of 0.35 mm to 0.7 mm.

6. Protective covering (10) according to one of the preceding claims, **characterized in that** the adhesive layer (14) is a hard adhesive, especially one based on an acrylic ester.

7. Protective covering (10) according to one of the preceding claims, **characterized in that** a PE covering is provided on the protective covering (10) on the side (16) facing away from the body.

8. Protective covering (10) according to one of the preceding claims, **characterized in that** the body part (12) is a wing, a bumper or a plastic part.

9. Method of producing a protective covering for a body part of a vehicle, especially a motor vehicle, the protective covering being preformed by deep-drawing and matched to the shape of the body part, and an adhesive layer being applied to the body side of the protective covering, **characterized in that** on the adhesive layer there is applied a liner which covers it, the liner being produced as a deep-drawn moulding.

10. Method according to Claim 9, **characterized in that** the protective covering is fabricated from PVC.

11. Method according to either of Claims 9 and 10, **characterized in that** the protective covering is produced as a film, in particular a stone-chip film and/or decorative film.

12. Method according to one of Claims 9 to 11, **characterized in that** the protective covering is designed to be transparent.

13. Method according to one of Claims 9 to 12, **characterized in that** the protective covering is fabricated with a thickness of 0.2 mm to 1.0 mm, in particular of 0.35 mm to 0.7 mm.

14. Method according to one of Claims 9 to 13, **characterized in that** the adhesive layer used is a hard adhesive, especially one based on an acrylic ester.

15. Method according to one of Claims 9 to 14, **characterized in that** immediately before the application of the protective covering, the adhesive layer is sprayed with a fluid, in particular water.

16. Method according to one of Claims 9 to 15, **characterized in that** a PE covering is applied to the protective covering on a side facing away from the body.

## Revendications

1. Ecran protecteur (10) pour une partie de carrosserie (12) d'un véhicule, en particulier d'un véhicule automobile (18), l'écran protecteur (10) étant une pièce formée par emboutissage profond, préformée, adaptée à la forme de la partie de carrosserie (12) et une couche de colle (14) étant prévue sur l'écran protecteur (10) du côté de la carrosserie, **caractérisé en ce qu'**il est prévu, sur la couche de colle (14), une doublure la recouvrant, qui est réalisée sous forme de pièce formée par emboutissage profond.

2. Ecran protecteur (10) selon la revendication 1, **caractérisé en ce que** l'écran protecteur (10) est fabriqué en PVC.

3. Ecran protecteur (10) selon la revendication 1 ou 2, **caractérisé en ce que** l'écran protecteur (10) est une feuille, en particulier une feuille antigravillons et/ou une feuille décorative.

4. Ecran protecteur (10) selon l'une quelconque des revendications précédentes, **caractérisé en ce que** l'écran protecteur (10) est transparent.

5. Ecran protecteur (10) selon l'une quelconque des revendications précédentes, **caractérisé en ce que** l'écran protecteur (10) présente une épaisseur de 0,2 mm à 1,0 mm, en particulier de 0,35 mm à 0,7 mm.

6. Ecran protecteur (10) selon l'une quelconque des revendications précédentes, **caractérisé en ce que** la couche de colle (14) est une couche de colle dure, en particulier à base d'acrylate.

7. Ecran protecteur (10) selon l'une quelconque des revendications précédentes, **caractérisé en ce qu'**un revêtement de PE est prévu sur l'écran protecteur (10) sur un côté (16) opposé à la carrosserie.

8. Ecran protecteur (10) selon l'une quelconque des revendications précédentes, **caractérisé en ce que** la partie de la carrosserie (12) est un garde-boue, un pare-chocs ou une pièce en plastique.

9. Procédé de fabrication d'un écran protecteur pour une partie de carrosserie d'un véhicule, en particulier d'un véhicule automobile, dans lequel l'écran protecteur est préformé par emboutissage profond, et adapté à la forme de la partie de carrosserie et une couche de colle est appliquée sur l'écran protecteur du côté de la carrosserie, **caractérisé en ce qu'**une doublure recouvrant la couche de colle est appliquée sur celle-ci, la doublure étant fabriquée sous forme de pièce formée par emboutissage profond.

10. Procédé selon la revendication 9, **caractérisé en ce que** l'écran protecteur est fabriqué en PVC.

11. Procédé selon l'une quelconque des revendications 9 ou 10, **caractérisé en ce que** l'écran protecteur est fabriqué sous forme de feuille, en particulier une feuille antigravillons et/ou une feuille décorative.

12. Procédé selon l'une quelconque des revendications 9 à 11, **caractérisé en ce que** l'écran protecteur est transparent.

13. Procédé selon l'une quelconque des revendications 9 à 12, **caractérisé en ce que** l'écran protecteur est fabriqué avec une épaisseur de 0,2 mm à 1,0 mm, en particulier de 0,35 mm à 0,7 mm.

14. Procédé selon l'une quelconque des revendications 9 à 13, **caractérisé en ce que** l'on utilise en tant que couche de colle une colle dure, en particulier à base d'acrylate.

15. Procédé selon l'une quelconque des revendications 9 à 14, **caractérisé en ce que** juste avant l'application de l'écran protecteur, la couche de colle est pulvérisée avec un fluide, en particulier de l'eau.

16. Procédé selon l'une quelconque des revendications 9 à 15, **caractérisé en ce que** l'on applique un revêtement de PE sur l'écran protecteur sur un côté opposé à la carrosserie.
